(19) Europäisches Patentamt
European Patent Office
Office européen des brevets

(11) Veröffentlichungsnummer: **0 591 278 B1**

(12) **EUROPÄISCHE PATENTSCHRIFT**

(45) Veröffentlichungstag der Patentschrift: **15.11.95**

(51) Int. Cl.⁶: **C08J 7/14**, C23C 18/24, //C08L59/02

(21) Anmeldenummer: **92912342.0**

(22) Anmeldetag: **11.06.92**

(86) Internationale Anmeldenummer: **PCT/EP92/01313**

(87) Internationale Veröffentlichungsnummer: **WO 93/00393 (07.01.93 93/02)**

# (54) VERFAHREN ZUR OBERFLÄCHENBEHANDLUNG VON POLYOXYMETHYLENFORMKÖRPERN UND DANACH ERHALTENE FORMKÖRPER.

(30) Priorität: **22.06.91 DE 4120724**

(43) Veröffentlichungstag der Anmeldung: **13.04.94 Patentblatt 94/15**

(45) Bekanntmachung des Hinweises auf die Patenterteilung: **15.11.95 Patentblatt 95/46**

(84) Benannte Vertragsstaaten: **AT BE CH DE ES FR GB IT LI NL SE**

(56) Entgegenhaltungen:
**EP-A- 0 259 064**
**DE-A- 3 137 587**
**US-A- 3 556 882**

(73) Patentinhaber: **BASF Aktiengesellschaft**
**Carl-Bosch-Strasse 38**
**D-67063 Ludwigshafen (DE)**

(72) Erfinder: **ZEINER, Hartmut**
**Paracelsusstrasse 18**
**D-6700 Ludwigshafen (DE)**
Erfinder: **BETZ, Walter**
**Weimarer Strasse 45**
**D-6700 Ludwigshafen (DE)**
Erfinder: **MC KEE, Graham, Edmund**
**Kastanienweg 8**
**D-6940 Weinheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft ein Verfahren zur Oberflächenbehandlung von Formkörpern auf der Basis von Polyoxymethylenen durch Behandlung mit wäßrigen Säuren.

Darüber hinaus betrifft die Erfindung nach diesem Verfahren erhältliche Formkörper sowie deren Verwendung zur Metallisierung, d.h. zur Beschichtung mit Metallen.

Polyoxymethylene zählen zur Klasse der technischen Kunststoffe und haben in vielen Bereichen weite Verbreitung gefunden.

Interessante Anwendungsgebiete im Bereich lackierter, bedruckter oder metallisierter Werkstoffe sind für Polyoxymethylene bislang jedoch verschlossen geblieben. Als Ursache hierfür gilt insbesondere die mangelhafte Benetzbarkeit und schlechte Haftung dünner Schichten auf dem Polyoxymethylen.

Die Problematik wird in den Artikeln von U. Rössler, Plaste und Kautschuk 21, 1974, S. 132ff und U. Zorll, Deutsche Farbenzeitung 32, 1978, S. 160ff diskutiert.

Verschiedene Lösungsansätze insbesondere für die Oberflächenvorbehandlung sind aus W. Wuich Kunststoffberater 7/8, 1982, S. 24ff bekannt. Als Beizlösung für das Aufbringen von Klebern wird für Polyoxymethylene wäßrige $H_3PO_4$ empfohlen.

Zur Metallisierung von Polyacetalen ist aus Alex S. Forschirm ANTEC '85, S. 1090 bekannt, $H_2SO_4$/HCl-Gemische in Verbindung mit Palladium- und Zinnchloriden zu verwenden.

Sog. Satinierverfahren für Polyoxymethylene sind aus L. Dorn et al, Kunststoffberater 10 (1982), S. 40ff bekannt. Das Beizbad besteht beim Satinierverfahren z.B. aus Perchlorethylen, Para-Toluol-Sulfonsäure, Dioxan und Kieselgur.

Weitere Vorbehandlungen zur Lackierung von Polyoxymethylenformkörpern sind aus K. Heberlein, Metalloberfläche 39 (1985), S. 355ff, und H. Benninghoff, Metalloberfläche 39 (1985), 10, S. 351, bekannt.

Nachteile der bekannten Verfahren bestehen vor allem im Hinblick auf umweltrelevante und arbeitstechnische Problemstellungen (Recycling, Entsorgung, Arbeitshygiene sowie Arbeitsplatzsicherheit).

Darüber hinaus sind die Haftfestigkeiten zwischen POM-Oberfläche und Beschichtungsmaterial nicht zufriedenstellend, da keine einheitlichen Haftwerte über die gesamte Oberfläche erzielt werden können.

Zudem sind die bekannten Verfahren in einem beträchtlichen Maße von der Art des Polyoxymethylens (z.B. füllstoff- oder glasfaserverstärkt sowie zähmodifiziert) abhängig sowie von der Art des Beschichtungsmaterials (z.B. Metall, Lack oder Kleber).

Aufgabe der vorliegenden Erfindung war es daher, ein Verfahren zur Oberflächenbehandlung von Formkörpern auf der Basis von Polyoxymethylenen zur Verfügung zu stellen, die anschließend gut beschichtbar sein sollten und welches die oben geschilderten Nachteile nicht aufweist.

Diese Aufgabe wird erfindungsgemäß durch ein Verfahren zur Oberflächenbehandlung von Formkörpern auf der Basis von Polyoxymethylenen durch Behandlung mit wäßrigen Säuren gelöst, wobei man Mischungen aus mindestens 20 Gew.-%iger wäßriger Salzsäure mit Mono- oder Diethern einer aliphatischen mehrfunktionellen Hydroxyverbindung im Mischungsverhältnis 90:10 bis 10:90 Vol.-% verwendet. Die Angaben in Gewichtsprozent beziehen sich auf den Gehalt HCl bei einer Temperatur von 20 °C, wobei dieser mind. 20 Gew.-%, vorzugsweise mind. 25 Gew.-% und insbesondere mind. 30 Gew.-% beträgt.

Das erfindungsgemäße Verfahren eignet sich zur Oberflächenbehandlung von Formkörpern auf der Basis von Polyoxymethylenen, d.h. Formkörper, die als wesentlichen Bestandteil ein Polyoxrnethylenhomo- oder copolymerisat enthalten. Dieses kann gegebenenfalls mit Füllstoffen, die Schlagzähigkeit verbessernden Polymeren, weiteren Polymeren und üblichen Additiven modifiziert sein.

Derartige Polyoxymethylenhomo- oder copolymerisate sind dem Fachmann an sich bekannt und in der Literatur beschrieben.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere bevorzugt, die neben den wiederkehrenden Einheiten $-CH_2O-$ noch bis zu 50, vorzugsweise 0,1 bis 20 und insbesondere 0,3 bis 10 mol.% an wiederkehrenden Einheiten

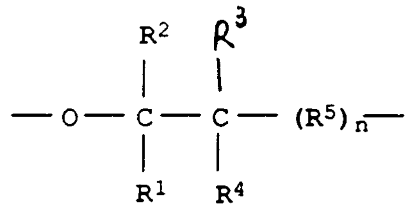

wobei $R^1$ bis $R^4$ unabhängig voneinander ein Wasserstoffatom, eine $C_1$-$C_4$-Alkylgruppe oder eine halogensubstituierte Alkylgruppe mit 1 bis 4 C-Atomen und $R^5$ eine $-CH_2-$, $-CH_2O-$, eine $C_1$-$C_4$-Alkyl- oder $C_1$-$C_4$-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel

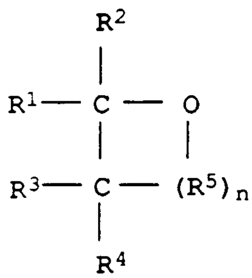

wobei $R^1$ bis $R^5$ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo-oder Polyformale wie Polydioxolan oder Polydioxepan als Comonomere genannt.

Ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel

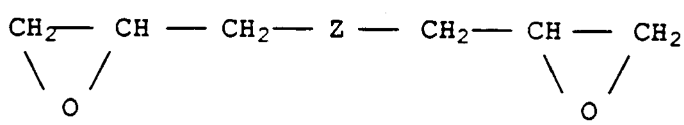

wobei Z eine chemische Bindung, -O-, -ORO- (R = $C_1$-$C_8$-Alkylen oder $C_2$-$C_8$-Cycloalkylen) ist, hergestellt werden.

Bevorzugte Monomere dieser Art sind Ethylendiglycid, Diglycidylether und Diether aus Glydicylen und Formaldehyd, Dioxan oder Trioxan im Molverhältnis 2:1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymeren haben Schmelzpunkte von mindestens 150 °C und Molekulargewichte (Gewichtsmittelwert) $M_w$ im Bereich von 5000 bis 150000, vorzugsweise von 7000 bis 100000.

Endgruppenstabilisierte Polyoxymethylenpolymerisate, die an den Kettenenden C-C-Bindungen aufweisen, werden besonders bevorzugt.

Zusätzlich können die Polxyoxymethylene noch 0 bis 50, vorzugsweise 5 bis 40 und insbesondere 10 bis 30 Gew.-% eines Schlagzäh modifizierenden Polymeren enthalten. Grundsätzlich eignen sich hierfür alle Arten von an sich bekannten Kautschuken, doch haben sich Pfropfkautschuke mit einer Pfropfgrundlage auf Butadien-Basis und einer Pfropfhülle aus vinylaromatischen Monomeren, (Meth)acrylnitril, (Meth)-

acrylsäure und (Meth)acrylsäureestern in einigen Fällen als besonders geeignet erwiesen. Entsprechende Produkte sind z.B. in der DE-A-19 64 156, der EP-A-156 285 und der DE-A-34 41 547 beschrieben; im Handel erhältlich sind geeignete Produkte unter den Bezeichnungen Paraloid® (Rohm & Haas). Wegen näherer Einzelheiten sei hier auf die erwähnten Druckschriften hingewiesen.

Als besonders geeigneter Pfropfkautschuk hat sich ein Produkt mit einer Pfropfgrundlage aus Polybutadien und geringen Anteilen (0,5 bis 3 Gew.-%) t-Dodecylmercaptan erwiesen, auf welche eine Pfropfhülle aus einer Mischung aus Acrylsäureestern und ggf. Styrol und (Meth)acrylnitril aufgepfropft ist; insbesondere besteht die Pfropfhülle aus einer Mischung aus Methylmethacrylat und n-Butylacrylat im Gewichtsverhältnis 70:30 bis 95:5, insbesondere 85:15 bis 95:5.

Polyurethane zur Schlagzähmodifizierung sind z.B. in den EP-A 115 846, EP-A-115 847, EP-A-116 456, EP-A-117 664 und der EP-A-327 384 beschrieben. Kommerziell im Handel sind solche Produkte z.B. unter den Bezeichnungen Desmopan® (Bayer AG) oder Elastollan® (Elastogran Polyurethane Elastomere GmbH) erhältlich.

Gegebenenfalls können die Polyoxymethylene 0 bis 40, vorzugsweise 5 bis 30 Gew.-% faser- oder teilchenförmige Füllstoffe oder deren Mischungen enthalten.

Als verstärkend wirkende Füllstoffe seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmen E-Glasen mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 mm, insbesondere 0,1 bis 0,5 mm aufweisen.

Andere geeignete Füllstoffe sind beispielsweise Wollastonit, Calciumcarbonat, Glaskugeln, Quarzmehl, Si- und Bornitrid oder Mischungen dieser Füllstoffe.

Übliche Zusatzstoffe und Verarbeitungshilfsmittel für POM sind beispielsweise Zusätze zum Abfangen von Formaldehyd (Formaldehyd-Scavenger), Weichmacher, Schmiermittel, Antioxidantien, Haftvermittler, Füllstoffe, Lichtstabilisatoren und Pigmente. Der Anteil solcher Zusätze liegt im allgemeinen im Bereich von 0,001 bis 5 Gew.-% (Stabilisatoren, Pigmente und Schmiermittel) bzw. 5 bis 40 Gew.-% (Füllstoffe).

Entsprechende Verbindungen sind dem Fachmann bekannt und beispielsweise in der EP-A-327 384 beschrieben.

Die Herstellung der Formkörper aus den vorstehend bechriebenen Polyoxymethylenformmassen kann nach dem üblichen, dem Fachmann bekannten, Verfahren, z.B. durch Extrusion, Spritzguß oder Blasformen erfolgen. Die Verarbeitungsbedingungen hängen natürlich von der Zusammensetzung der Polyoxymethylenformmasse ab und sind dem Fachmann bekannt.

Die Oberflächenbehandlung der Formkörper auf der Basis von Polyoxymethylenen erfolgt mit Hilfe einer Mischung aus mind. 20 gew.-%iger Salzsäure und einem Mono- oder Diether einer aliphatischen mehrfunktionellen Hydroxyverbindung im Mischungsverhältnis 90:10 bis 10:90, vorzugsweise 30:70 bis 70:30 und insbesondere 50:50 Vol-%. Zeitdauer und Temperatur der Behandlung hängen dabei voneinander ab; je höher die Temperatur, desto kürzer die Behandlungsdauer. Eine Erhöhung der Konzentration des HCl-Gehaltes ergibt gleichfalls eine kürzere Behandlungsdauer.

Bevorzugt wird eine Temperatur von 10 bis 80 °C, insbesondere 15 bis 45 °C und ganz besonders von 18 bis 35 °C.

Die Behandlungsdauer liegt vorzugsweise im Bereich von 0,5 bis 25 Minuten, insbesondere 1 bis 15 Minuten und ganz besonders von 5 bis 10 Minuten.

Es hat sich als vorteilhaft herausgestellt, wenn bei einer Konzentration der Salzsäure von 25 bis 37 Gew.-% das Produkt aus Behandlungstemperatur in Grad Celsius und der Behandlungsdauer in Sekunden im Bereich von 1000 bis 21 000 liegt, da bei der Beschichtung derart vorbehandelter Formkörper besonders gute Gitterschnittwerte erzielt werden.

Als weiteren Bestandteil der Vorbehandlungsmischung verwendet man Mono- oder Diether einer aliphatischen mehrfunktionellen Hydroxyverbindung der allgemeinen Formel I

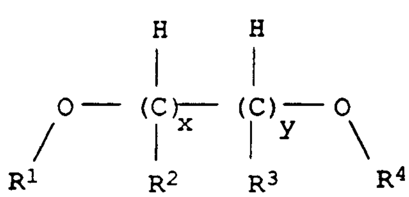

I

wobei

- $R^1$ Wasserstoff oder eine $C_1$- bis $C_{10}$-Alkylgruppe,
- $R^2$ Wasserstoff oder eine $C_1$- bis $C_{10}$-Alkylgruppe oder eine Hydroxylgruppe,
- $R^3$ Wasserstoff oder eine $C_1$- bis $C_{10}$-Alkylgruppe,
- $R^4$ Wasserstoff oder eine $C_1$- bis $C_{10}$-Alkylgruppe oder eine $-(CH_2)_n-OR^5$-Gruppe,
- $R^5$ Wasserstoff oder eine $C_1$- bis $C_{10}$-Alkylgruppe,
- x eine ganze Zahl von 1 bis 10,
- y 0 oder 1,
- n eine ganze Zahl von 2 bis 4

bedeutet, mit der Maßgabe, daß Wasserstoff nicht für $R^1$ und $R^4$ steht.

Bevorzugte Reste $R^1$ sind Methyl, Ethyl, Propyl oder eine n-Butylgruppe, $R^2$ ist bevorzugt Wasserstoff oder eine Methylgruppe sowie eine Hydroxylgruppe, wobei bei dem letztgenannten Substituenten x mind. 2 betragen sollte. Für $R^3$ seien als bevorzugte Reste die Methylgruppe oder Wasserstoff genannt, für $R^4$ Wasserstoff und eine $(CH_2)_nOR^5$-Gruppe, in der n vorzugsweise für eine ganze Zahl 2 oder 3 steht und $R^5$ vorzugsweise eine Methylgruppe bedeutet.

Als bevorzugte Verbindungen der allgemeinen Formel seien 1-Methoxy-2-hydroxypropan, (Propylenglykol-1-methylether), Dipropylenglykolmonomethylether, Ethylenglykolmonomethylether und Diethylenglykolmonomethylether sowie Di- oder Monomethylether des Glycerins genannt.

Derartige Zusätze sind allgemein bekannt und im Handel erhältlich (z.B. Solvenon® oder Methylglykol).

Nach der Vorbehandlung werden die Formkörper vorteilhafterweise durch Spülen in Wasser von anhaftenden Säureresten befreit.

Im Anschluß daran kann dann der Formkörper in üblicher, an sich bekannter Weise metallisiert werden.

Hierzu wird in der Regel zunächst aktiviert, dann reduziert und anschließend chemisch metallisiert, woran sich die galvanische Metallisierung als letzter Schritt anschließt.

Dabei werden Produkte erhalten, die sich durch besonders hohe Haftfestigkeiten und Beständigkeit bei Temperaturwechsel auszeichnen sowie durch eine insgesamt glatte, kaum angerauhte Oberfläche. Es werden neben hohen auch einheitliche Haftfestigkeiten über die gesamte Oberfläche des Formkörpers erzielt, die weitestgehend unabhängig von der Art des eingesetzten Polyoxymethylens sind.

Durch die Behandlung mit HCl werden die in der Oberflächenschicht enthaltenen Ethergruppen des Polyoxymethylens durch Reaktion mit HCl modifiziert, wobei zur Erzielung besonders guter Ergebnisse in einer Oberflächenschicht von max. 100 $\mu$m Dicke mindestens 5 mol% der ursprünglich vorhandenen Ethergruppen verändert werden.

Aus dem Vorstehenden geht bereits hervor, daß sich die erfindungsgemäßen Formkörper insbesondere zur anschließenden Metallisierung eignen. Darüber hinaus lassen sich nach dem erfindungsgemäßen Verfahren behandelte Formkörper auch gut lackieren und bedrucken. Die so erhaltenen metallisierten Formkörper können in vielen Bereichen, z.B. im Automobilsektor oder auf dem Gebiet der Sanitärtechnik und Verbraucherprodukte (z.B. Kosmetikabehälter) eingesetzt werden.

## Beispiele

Eine 2 mm dicke Platte aus einem Polyoxymethylen-Copolymerisat aus Trioxan und 2,5 bis 3 Gew.-% Butandiolformal, bezogen auf den Gesamtmonomergehalt (Ultraform® N 2320 der Ultraform GmbH mit einem Schmelzindex von 7,4 g/10 min (190 °C/2,16 kg)) wurde mit Isopropanol vorgereinigt und anschließend mit einem Ätzmedium behandelt. (Zusammensetzung sowie Mischungsverhältnisse, Temperatur und Behandlungsdauer s. Tabelle 1).

Anschließend wurden die sauren Rückstände durch eine Ultraschallbehandlung (ca. 10 min) in gesättigter Natriumcarbonatlösung entfernt sowie mit destilliertem Wasser gespült und getrocknet.

Die Beschichtung erfolgte in an sich bekannter Weise mit einem Haftlack auf Epoxidharzbasis.

Die Bewertung der Haftfestigkeit erfolgte mittels des Gitterschnitttests nach DIN 53 151 nach 144 Stunden. Danach ergibt sich folgende Klassifizierung der Gitterschnitt-Kennwerte:

| Gitterschnitt-Kennwert | Beschreibung |
|---|---|
| Gt 0 | Die Schnittränder sind vollkommen glatt, kein Teilstück des Anstriches ist abgeplatzt. |
| Gt 1 | An den Schnittpunkten der Gitterlinien sind kleine Splitter des Anstriches abgeplatzt; abgeplatzte Fläche etwa 5 % der Teilstücke. |
| Gt 2 | Der Anstrich ist längs der Schnittränder und/oder an den Schnittpunkten der Gitterlinien abgeplatzt; abgeplatzte Fläche etwa 15 % der Teilstücke. |
| Gt 3 | Der Anstrich ist längs der Schnittränder teilweise oder ganz in breiten Streifen abgeplatzt und/oder der Anstrich ist von einzelnen Teilstücken ganz oder teilweise abgeplatzt; abgeplatzte Fläche etwa 35 % der Teilstücke. |
| Gt4 | Der Anstrich ist längs der Schnittränder in breiten Streifen und/oder von einzelnen Teilstücken ganz oder teilweise abgeplatzt; abgeplatzte Fläche etwa 65 % der Teilstücke. |
| Gt 5 | Abgeplatzte Fläche mehr als 65 % der Teilstücke. |

Die Prüfung der Temperaturwechselprüfung erfolgte nach DIN 53 496.

Zum Vergleich wurden gleiche Polyoxymethylenplatten mit anderen Konzentrationsverhältnissen der Säure bzw. anderen wäßrigen Säuren in identischer Weise vorbehandelt und beschichtet.

Die Ergebnisse der Messungen sind der Tabelle 1 zu entnehmen.

Tabelle 1

| Beispiel | Ätzmedium | Volumenverhältnis | Temp. (°C) | Zeit (min) | Gitterschnittkennwert (Gt) | Temperaturwechselprüfung Beanspruchungsklasse A (DIN 53 496) |
|---|---|---|---|---|---|---|
| 1 | Propylenglykol-1-methylether/37 Gew.-% Salzsäure | 1:2 | 23 | 5 | 0 | bestanden |
| 2 | Propylenglykol-1-methylether/37 Gew.-% Salzsäure | 1:1 | 23 | 10 | 0 | bestanden |
| 3 | Propylenglykol-1-methylether/37 Gew.-% Salzsäure | 2:1 | 23 | 15 | 0 | bestanden |
| V1 | Propylenglykol-1-methylether/10 Gew.-% HCl | 1:2 | 23 | 15 | 4 | nicht bestanden |
| V2 | Propylenglykol-1-methylether/10 Gew.-% HCl | 1:2 | 40 | 15 | 2 | bestanden |
| V3 | Propylenglykol-1-methylether/10 Gew.-% HCl | 2:1 | 23 | 15 | 5 | nicht bestanden |
| V4 | Propylenglykol-1-methylether/10 Gew.-% HCl | 2:1 | 40 | 15 | 4 | nicht bestanden |
| V5 | Propylenglykol-1-methylether/70 Gew.-% HCOOH | 1:2 | 23 | 15 | 4 | nicht bestanden |
| V6 | Propylenglykol-1-methylether/70 Gew.-% HCOOH | 1:2 | 40 | 15 | 4 | nicht bestanden |
| V7 | Propylenglykol-1-methylether/70 Gew.-% $H_3PO_4$ | 1:2 | 23 | 15 | 5 | nicht bestanden |

| | | | | | | |
|---|---|---|---|---|---|---|
| V8 | Propylenglykol-1-methylether/70 Gew.-% $H_3PO_4$ | 1:2 | 40 | 15 | 5 | nicht bestanden |
| 4 | Dipropylenglykolmonomethylether/37 Gew.-% HCl | 1:2 | 23 | 10 | 0 | bestanden |
| 5 | Dipropylenglykolmonomethylether/37 Gew.-% HCl | 1:1 | 23 | 15 | 0 | bestanden |
| 6 | Dipropylenglykolmonomethylether/37 Gew.-% HCl | 2:1 | 23 | 20 | 0 | bestanden |
| V9 | ohne Vorbehandlung | | - | - | 5 | nicht bestanden |

Tabelle 1 (Fortsetzung)

| Beispiel | Ätzmedium | Temp. (°C) | Zeit (min) | Gitterschnittkennwert (Gt) | Temperaturwechselprüfung Beanspruchungsklasse A (DIN 53 496) |
|---|---|---|---|---|---|
| V10 | Chromschwefelsäure | 23 | 2 | 4 | nicht bestanden Spannungsrisse |
| V11 | Schwefelsäure conc. | 23 | 1 | 3 | nicht bestanden Spannungsrisse |
| V12 | 50 Gew.-% wäßrige Schwefelsäure | 23 | 5 | 3 | nicht bestanden |
| V13 | Gemisch aus 35 Gew.-% wäßrige Schwefelsäure und 20 Gew.-% wäßrige Salzsäure im Verhältnis 1:1 (v/v) | 23<br>60 | 8<br>4 | 1<br>1 | bestanden<br>bestanden |
| V14 | Salpetersäure conc. | 23 | 0,5 | 5 | nicht bestanden |
| V15 | 50 Gew.-% wäßrige Salpetersäure | 23 | 5 | 4 | nicht bestanden |

Tabelle 1 (Fortsetzung)

| Beispiel | Ätzmedium | Temp. (°C) | Zeit (min) | Gitterschnittkennwert (Gt) | Temperaturwechselprüfung Beanspruchungsklasse A (DIN 53 496) |
|---|---|---|---|---|---|
| V16 | 25 Gew.-% wäßrige Salpetersäure | 40 | 10 | 4 | nicht bestanden |
| | | 23 | 10 | 5 | |
| V17 | 36 Gew.-% wäßrige Salzsäure (conc.) | 23 | 5 | 3 | nicht bestanden |
| V17 | 36 Gew.-% wäßrige Salzsäure | 60 | 2 | 3 | nicht bestanden |
| V17 | 36 Gew.-% wäßrige Salzsäure | 60 | 5 | 3 | nicht bestanden |
| V18 | 20 Gew.-% wäßrige Salzsäure | 23 | 10 | 3 | nicht bestanden |
| | | 60 | 10 | 3 | |
| V19 | 10 Gew.-% wäßrige HCl | 23 | 15 | 5 | nicht bestanden |
| | 10 Gew.-% wäßrige HCl | 60 | 15 | 4 | nicht bestanden |
| V20 | Essigsäure konz. | 23 | 15 | 2 | bestanden |
| V21 | Ameisensäure konz. | 23 | 15 | 5 | nicht bestanden |
| | | 60 | 15 | 5 | |
| V22 | Oxalsäure, gesättigte wäßrige Lösung | 60 | 15 | 5 | nicht bestanden |
| V23 | 70 Gew.-% $H_3PO_4$ | 60 | 15 | 5 | nicht bestanden |
| V24 | Satinierbad 96 Gew.-% Perchlorethylen<br>3,7 Gew.-% Dioxan<br>0,3 Gew.-% p-Toluol-Sulfonsäure | 60 | 1 | 2 | bestanden |

Beispiele 7 bis 13

Ätzmedium, Vorbehandlungstemperatur und Zeit sowie Beschichtungsweise entsprachen dem erfindungsgemäßen Beispiel 2. Es wurden unterschiedliche Zusammensetzungen der Polyoxymethylene verwendet.

Tabelle 2

| Beispie l | Polyoxymethylenzusammensetzung | Gitterschnittkennwert | Temperaturwechselprüfung |
|---|---|---|---|
| 7 | 90 Gew.-% POM-copolymerisat gem. Bsp. 2 10 Gew.-% Glasfasern | 0 | bestanden |
| 8 | 90 Gew.-% POM-copolymerisat 25 Gew.-% Glasfasern | 0 | bestanden |
| 9 | 80 Gew.-% POM-copolymerisat 20 Gew.-% Wollastonit | 0 | bestanden |
| 10 | 96,5 Gew.-% POM-copolymerisat 3,5 Gew.-% Kreide | 0 | bestanden |
| 11 | 80 Gew.-% POM-copolymerisat 20 Gew.-% C-Fasern | 0 | bestanden |
| 12 | 90 Gew.-% POM-copolymerisat 10 Gew.-% TPU*) | 0 | bestanden |
| 13 | 70 Gew.-% POM-copolymerisat 30 Gew.-% TPU*) | 0 | bestanden |

*)Thermoplastisches Polyurethan (Desmopan® der Firma Bayer AG, Leverkusen)

**Patentansprüche**

1. Verfahren zur Oberflächenbehandlung von Formkörpern auf der Basis von Polyoxymethylenen durch Behandlung mit wäßrigen Säuren, dadurch gekennzeichnet, daß man Mischungen aus mind. 20 gew.-%iger wäßriger Salzsäure mit Mono- oder Diethern einer aliphatischen mehrfunktionellen Hydroxyverbindinng im Mischungsverhältnis von 90:10 bis 10:90 Vol.-% verwendet.

2. Verfahren nach Anspruch 1, dadurch gekennzeichnet, daß man die Behandlung bei Temperaturen von 10 bis 80 °C durchführt.

3. Verfahren nach den Ansprüchen 1 oder 2, dadurch gekennzeichnet, daß man die Behandlung über einen Zeitraum von 0,5 bis 25 Minuten durchführt.

4. Verfahren nach den Ansprüchen 1 bis 3, dadurch gekennzeichnet, daß man Mono- oder Diether einer aliphatischen mehrfunktionellen Hydroxyverbindung der allgemeinen Formel I verwendet:

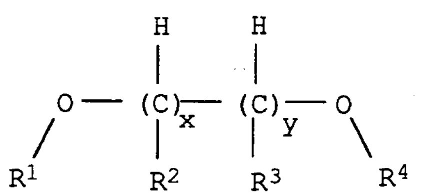

I

wobei

| | |
|---|---|
| $R^1$ | Wasserstoff oder eine $C_1$- bis $C_{10}$-Alkylgruppe, |
| $R^2$ | Wasserstoff oder eine $C_1$- bis $C_{10}$-Alkylgruppe oder eine Hydroxylgruppe, |
| $R^3$ | Wasserstoff oder eine $C_1$- bis $C_{10}$-Alkylgruppe, |
| $R^4$ | Wasserstoff oder eine $C_1$- bis $C_{10}$-Alkylgruppe oder eine $-(CH_2)_n-OR^5$-Gruppe, |
| $R^5$ | Wasserstoff oder eine $C_1$- bis $C_{10}$-Alkylgruppe, |
| x | eine ganze Zahl von 1 bis 10, |

y 0 oder 1,
n eine ganze Zahl von 2 bis 4
bedeutet, mit der Maßgabe, daß Wasserstoff nicht für $R^1$ und $R^4$ steht.

**5.** Formkörper, erhältlich gemäß dem Verfahren nach den Ansprüchen 1 bis 4.

**6.** Polyoxymethylenformkörper, erhältlich gemäß dem Verfahren nach den Ansprüchen 1 bis 4, in denen in einer Oberflächenschicht von maximal 100 µm Dicke mind. 5 mol-% der ursprünglich vorhandenen Ethergruppen durch Reaktion mit HCl modifiziert sind.

**7.** Verwendung der Formkörper gemäß den Ansprüchen 5 oder 6 zur Lackierung, Bedruckung, Metallisierung, Beklebung und Beflockung.

**Claims**

**1.** A process for surface treatment of moldings based on polyoxymethylenes by treatment with aqueous acids, which comprises using a mixture of at least 20% strength by weight aqueous hydrochloric acid with a mono- or diether of an aliphatic polyfunctional hydroxy compound in a mixing ratio of from 90:10 to 10:90 % by volume.

**2.** A process as claimed in claim 1, wherein the treatment is carried out at from 10 to 80 °C.

**3.** A process as claimed in claim 1 or 2, wherein the treatment is carried out for 0.5 to 25 minutes.

**4.** A process as claimed in claim 1 or 2 or 3, wherein the mono- or diether of an aliphatic polyfunctional hydroxy compound has the general formula I:

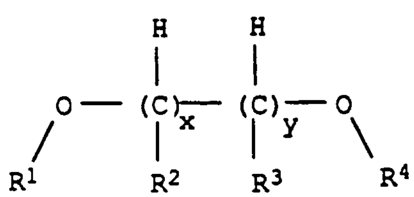

I

where
$R^1$ is hydrogen or $C_1$- to $C_{10}$-alkyl,
$R^2$ is hydrogen, $C_1$- to $C_{10}$-alkyl or hydroxyl,
$R^3$ is hydrogen or $C_1$- to $C_{10}$-alkyl,
$R^4$ is hydrogen, $C_1$- to $C_{10}$-alkyl or $-(CH_2)_n-OR^5$,
$R^5$ is hydrogen or $C_1$- to $C_{10}$-alkyl,
x is an integer from 1 to 10,
y is 0 or 1, and
n is an integer from 2 to 4,
with the proviso that $R^1$ and $R^4$ are not both hydrogen.

**5.** A molding obtainable as claimed in claim 1 or 2 or 3 or 4.

**6.** A polyoxymethylene molding obtainable as claimed in claim 1 or 2 or 3 or 4, in which in a surface layer of not more than 100 µm thickness at least 5 mol% of the ether groups originally present have been modified by reaction with HCl.

**7.** The use of a molding as claimed in claim 5 or 6 as a coating, printing, metallization, cementing or flocking substrate.

## Revendications

1. Procédé de traitement superficiel de corps moulés a base de polyoxyméthylènes par traitement par des acides aqueux, caractérisé en ce que l'on utilise des mélanges d'acide chlorhydrique aqueux à 20% en poids au moins avec des mono- ou diéthers d'un composé aliphatique hydroxylé polyfonctionnel, dans un rapport de mélange de 90:10 à 10:90% en volume.

2. Procédé selon la revendication 1, caractérisé en ce que l'on effectue le traitement à des températures de 10 à 80 °C.

3. Procédé selon la revendication 1 ou 2, caractérisé en ce que l'on effectue le traitement pendant une période de 0,5 à 25 min.

4. Procédé selon l'une quelconque des revendications 1 à 3, caractérisé en ce que l'on utilise des mono- ou diéthers d'un composé aliphatique hydroxylé polyfonctionnel de formule générale I

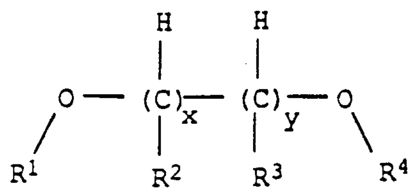

I

dans laquelle

- $R^1$ représente un atome d'hydrogène ou un groupement alkyle en $C_1$-$C_{10}$,
- $R^2$ représente un atome d'hydrogène, un groupement alkyle en $C_1$-$C_{10}$ ou un groupement hydroxy,
- $R^3$ représente un atome d'hydrogène ou un groupement alkyle en $C_1$-$C_{10}$,
- $R^4$ représente un atome d'hydrogène ou un groupement alkyle en $C_1$-$C_{10}$ ou $-(CH_2)_n-OR^5$,
- $R^5$ représente un atome d'hydrogène ou un groupement alkyle en $C_1$-$C_{10}$,
- x est un nombre entier de 1 à 10,
- y est mis pour 0 ou 1,
- n est un nombre entier de 2 à 4,

étant spécifié que $R^1$ et $R^4$ ne sont pas mis l'un et l'autre pour des atomes d'hydrogène.

5. Corps moulés, obtenus par le procédé selon l'une quelconque des revendications 1 à 4.

6. Corps moulés en polyoxyméthylène, obtenus par le procédé selon l'une quelconque des revendications 1 à 4, dans lesquels, dans une couche superficielle de 100 µm d'épaisseur au maximum, 5% en moles au moins des groupements éther présents initialement sont modifiés par réaction avec HCl.

7. Utilisation des corps moulés selon la revendication 5 ou 6 à des fins de laquage, d'impression, de métallisation, de collage et de flocage.